# EUROPÄISCHE PATENTSCHRIFT

(11) **EP 2 147 185 B1**
(45) Veröffentlichungstag und Bekanntmachung des Hinweises auf die Patenterteilung: **04.04.2012**
(21) Anmeldenummer: 08733246.6
(22) Anmeldetag: 18.04.2008
(51) Int. Cl.: E21B 17/04, E21D 21/00, F16L 13/14, F16L 37/02, B21D 39/04, B21K 25/00

(54) **ROHRVERBINDUNGSMUFFE**
PIPE COUPLING
MANCHON DE CONNEXION DE TUBES

(30) Priorität: 19.04.2007 AT 6062007
(43) Veröffentlichungstag der Anmeldung: 27.01.2010
(73) Patentinhaber: Techmo Entwicklungs- und Vertriebs GmbH, 8753 Fohnsdorf (AT)
(72) Erfinder: MOCIVNIK, Josef, verstorben (AT)
(74) Vertreter: Peel, James Peter
(86) Internationale Anmeldenummer: PCT/AT2008/000143
(87) Internationale Veröffentlichungsnummer: WO 2008/128269

(56) Entgegenhaltungen:
- EP-A- 0 678 655
- DE-U1-202004 016 655
- US-A- 2 354 656
- US-A- 2 609 638
- US-A- 2 819 880
- US-A- 3 021 159
- US-A- 4 681 175
- US-A- 5 301 877

## Beschreibung

Die Erfindung betrifft eine Rohrverbindungsmuffe in Hohlzylinderform zum Verbinden eines in einem Gesteinsbohrloch befindlichen Endes eines im Gesteinsbohrloch befindlichen ersten Rohres mit einem Ende eines zweiten Rohres.

In der Bergbautechnik werden beispielsweise zum Erstellen eines Rohrschirmes Bohranker (Gebirgsanker) gesetzt, die außenseitig von Rohren gebildet sind. Wenn ein solcher Rohrschirm mit sich über größere Längen erstreckenden Bohrlöchern gebildet werden soll, ist es erforderlich, jeden Bohranker aus einzelnen in Längsrichtung hintereinander liegenden Rohren zu bilden. Diese Rohre müssen miteinander verbunden werden, wobei jedoch keine besonderen Anforderungen an eine Dichtheit der Rohrverbindungen gestellt sind. Wesentlich ist eine gute mechanische Verbindung, die ein Lösen der Rohre voneinander bei Einwirken von Kräften senkrecht zur Rohrlängsachse verhindert.

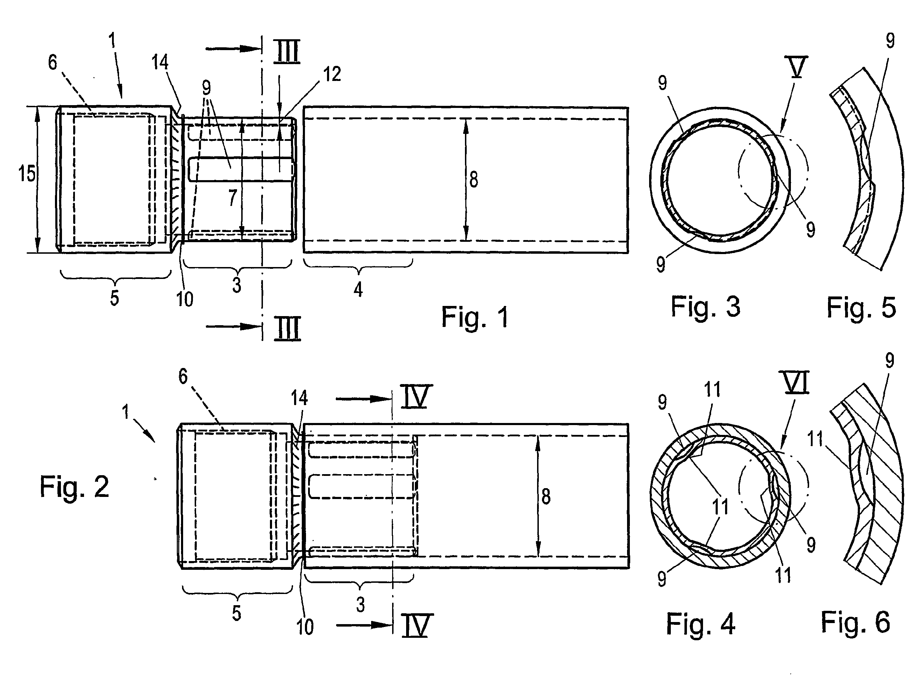

Dokument US-PS 4,681,175 offenbart (Fig. 1) eine Rohrverbindungsmuffe mit einer im Bereich eines Einsteckteils spiralförmigen sich längs der Rohrachse verjüngenden Schraube, deren "Kanten" beim Eindrehen der Rohrverbindungsmuffe in das Rohr in die Rohrwand einschneiden.

Dokument US-PS 3,021,159 offenbart (Fig.7) eine Rohrverbindungsmuffe mit einem im Bereich eines Einsteckteils längs der Rohrachse verlaufenden Schlitz.

Wichtig ist, dass die Rohrverbindung in einfacher Weise ohne großen Aufwand herstellbar ist, und zwar auch dann, wenn sich das Ende eines in einem Bohrloch befindlichen Rohres ebenfalls im Bohrloch befindet. Weiters soll die Rohrverbindung für Rohre einsetzbar sein, die mit relativ großen Toleranzen hergestellt sind und trotzdem eine mechanisch hoch beanspruchbare Verbindung bilden.

Diese Aufgabe wird erfindungsgemäß durch eine Rohrverbindungsmuffe nach Anspruch 1 gelöst.

Der Deformationsbereich ermöglicht eine geringe Durchmesserabnahme des Einsteckteils, und zwar in Abhängigkeit vom Innendurchmesser des über den Einsteckteil aufzuschiebenden Rohres. Durch diese Deformation wird ein zuverlässiger Sitz des Einsteckteils in dem diesen übergreifenden Rohr bewirkt, und zwar durch relativ große, zwischen dem Einsteckteil und dem ersten Rohr wirkende Reibungskräfte.

Selbstverständlich kann eine solche Rohrverbindungsmuffe auch dazu verwendet werden, zwei Rohre außerhalb des Gebirgsbohrloches miteinander zu verbinden und diese so verbundenen Rohre dann in das Gesteinsbohrloch einzubringen.

Gemäß einer bevorzugten Ausführungsform weist die Rohrverbindungsmuffe noch zusätzlich folgende Merkmale in Kombination auf:
- der Übergreifteil weist einen größeren Außendurchmesser auf als das Bohrloch
- und einen größeren Innendurchmesser als das Ende des zweiten Rohres,
- wobei die Wandstärke des Übergreifteils derart bemessen ist, dass eine Verringerung seines Innen- und Außendurchmessers beim Einsetzen in das Bohrloch gegeben ist.

Zweckmäßig sind zwei oder mehrere am Umfang verteilt angeordnete Deformationsbereiche am Einsteckteil vorgesehen, vorzugsweise drei.

Die Deformationsbereiche werden von nutförmigen Vertiefungen gebildet, wobei zweckmäßig der Grund der Nut einen bogenförmigen konkaven Querschnitt aufweist.

Gemäß einer bevorzugten Variante beträgt die Wandstärke im Deformationsbereich maximal bis zu einem Drittel der Wandstärke neben dem Deformationsbereich, vorzugsweise maximal bis zu einem Viertel.

Eine weitere bevorzugte Ausführungsform ist dadurch gekennzeichnet, dass der Übergreifteil mit einem Innengewinde und das Ende des zweiten Rohres mit einem Außengewinde versehen sind.

Eine einfache Herstellung einer solchen Rohrverbindungsmuffe ist gegeben, wenn der Einsteckteil und der Übergreifteil als Einzelteile gefertigt und mittels einer Schweißnaht miteinander verbunden sind.

Die Erfindung ist nachfolgend anhand eines in der Zeichnung dargestellten Ausführungsbeispiels näher erläutert, wobei Fig. 1 eine erfindungsgemäße Rohrverbindungsmuffe in Seitenansicht vor dem Einsetzen in ein Rohr und Fig. 2 nach dem Einsetzen in ein Rohr veranschaulichen. Die Fig. 3 und 4 stellen Schnitte gemäß den Linien III-III und IV-IV der Fig. 1 und 2 dar. Die Fig. 5 und 6 zeigen Details V und VI der Fig. 3 und 4 in einem größeren Maßstab.

Eine Rohrverbindungsmuffe 1 zum Verbinden zweier Rohre 2 weist einen Einsteckteil 3 zum Einführen in das Ende 4 eines ersten Rohres 2 und einen Übergreifteil 5 zum Übergreifen des Endes eines zweiten, nicht näher dargestellten Rohres auf. Der Übergreifteil 5 ist gemäß der in Fig. 1 dargestellten Ausführungsform mit einem Innengewinde 6 ausgestattet, welches über ein Außengewinde des zweiten Rohres aufschraubbar ist.

Der Einsteckteil 3 weist einen geringeren Außendurchmesser 7 auf als der Übergreifteil 5, wobei jedoch der Außendurchmesser 7 größer bemessen ist als der Innendurchmesser 8 des ersten Rohres 2, in den der Einsteckteil 3 eingeführt werden soll. Die Größenordnung des Durchmesserunterschiedes liegt vorzugsweise zwischen 0,3 % und 3 % des Innendurchmesser 8 des ersten Rohres 2. Der Einsteckteil 3 weist weiters drei gleichmäßig über den Umfang verteilt angeordnete und sich längs erstreckende Wandstärkenverringerungen auf, die als Deformationsbereiche 9 beim Einstecken des Einsteckteils 3 in das erste Rohr 2 dienen. Diese Deformationsbereiche 9 sind als nutförmige Vertiefungen ausgebildet, die einen nach außen gerichteten bogenförmigen, konkaven Querschnitt aufweisen.

Das zum ersten Rohr 2 gerichtete Ende des Einsteckteils 3 ist abgefast, sodass der Einsteckteil 3 zu Beginn des Einführens in das erste Rohr 2 an diesem gut ansetzbar ist. Weiters ist der Einsteckteil 3 mit einem ringförmigen Kragen 10 versehen, und zwar an dem Ende, an dem er an den Übergreifteil 5 anschließt, wodurch ein Anschlag beim Einführen des Einsteckteils 3 in das erste Rohr 2 gebildet ist, sodass der Einsteckteil 3 über eine definierte Länge in das erste Rohr 2 einsetzbar ist.

Beim Einschieben bzw. Einpressen bzw. Einschlagen des Einsteckteiles 3 in das Ende 4 des ersten Rohres 2, das unter einer die Deformation der Deformationsbereiche 9 bewirkenden Krafteinwirkung statfinden muss, kommt es, wie in den Fig. 4 und 6 veranschaulicht, zu einer Wölbung 11 der Deformationsbereiche 9, wodurch ein Anpassen des Außendurchmessers 7 des Einsteckteils 3 an den Innendurchmesser 8 des ersten Rohres 2 gegeben ist und ein sattes Anliegen des Einsteckteils 3 mit seiner Außenfläche an der Innenfläche des ersten Rohres 2 bewirkt ist.

Die zwischen den Deformationsbereichen liegenden Wandteile des Einsteckteils 3 werden beim Einführen des Einsteckteils 3 in das Ende des ersten Rohres 2 entsprechend dem Innendruchmesser 8 des ersten Rohres 2 elastisch verformt, wodurch relativ große Reibungskräfte zwischen diesen Teilen bedingt sind.

Die Anzahl der Deformationsbereiche 9 und deren Gestalt, d.h. die Schwächung der Wandstärke 12 des Einsteckteils 3, richtet sich nach den maximal aufzubringenden Kräften beim Einbringen des Einsteckteils 3 in das erste Rohr 2, wobei zu berücksichtigen ist, dass eine Deformation des ersten Rohres 2 tunlichst vermieden werden soll.

Die Deformationsbereiche 9 erstrecken sich nicht ganz bis zu dem das Einführen des Einsteckteils 3 in das erste Rohr 2 begrenzenden Ringwulst 10, sodass die zwischen den Deformationsbereichen 9 und dem Ringwulst 10 verbleibende schmale durchgehende Ringfläche 13 eine gute Dichtung bewirkt, falls dies erwünscht ist.

Der Einsteckteil 3 ist zwecks einfacher Fertigung der Rohrverbindungsmuffe 1 mit dem Übergreifteil 5, der vorzugsweise das Innengewinde 6 aufweist, mit einer Schweißnaht 14 verbunden, sodass diese beiden Teile leicht serienmäßig getrennt hergestellt und dann mit einem Schweißautomaten verbunden werden können.

Die Erfindung beschränkt sich nicht auf das in der Zeichnung dargestellte Ausführungsbeispiel, sondern sie kann in verschiedener Hinsicht modifiziert werden.

Beispielsweise ist es möglich, dass der Übergreifteil 5 einen größeren Außendurchmesser 15 aufweist als das Bohrloch und einen größeren Innendurchmesser als das Ende des zweiten Rohres, wobei die Wandstärke des Übergreifteiles 5 derart bemessen ist, dass eine Verringerung seines Innen- und Außendurchmessers beim Einsetzen in das Bohrloch gegeben ist und der Übergreifteil 5 an das Ende des zweiten Rohres angepresst wird. In diesem Fall entfällt das Innengewinde des Übergreifteils 5 ebenso wie das Außengewinde am Ende des zweiten Rohres. Weiters könnte auch der Übergreifteil 5 mit eigenen Deformationsbereichen versehen sein.

## Patentansprüche

1. Rohrverbindungsmuffe (1) in Hohlzylinderform zum Verbinden eines in einem Gesteinsbohrloch befindlichen Endes (4) eines im Gesteinsbohrloch befindlichen ersten Rohres (2) mit einem Ende eines zweiten Rohres, mit folgenden Merkmalen:
- einen Einsteckteil (3) zum Einrühren in das Ende (4) des ersten Rohres (2),
- einen Übergreifteil (5) zum Übergreifen des Endes des zweiten Rohres,
- der Einsteckteil (3) weist vor dem Einführen in das Ende (4) des ersten Rohres (2) einen größeren Außendurchmesser (7) auf als der Innendurchmesser (8) des Endes (4) des ersten Rohres (2), **dadurch gekennzeichnet, dass** der Einsteckteil (3),
mit mindestens einem sich längs erstreckenden, eine Durchmesserverringerung unter plastischer Verformung ermöglichenden Deformationsbereich (9) versehen ist, wobei der mindestens eine Deformationsbereich (9) von einer nutförmigen Vertiefung gebildet ist.

2. Röhrverbindungsmuffe (1) nach Anspruch 1, **gekennzeichnet durch** die Kombination folgender Merkmale:
- der Übergreifteil (5) weist einen größeren Außendurchmesser (15) auf als das Bohrloch
- und einen größeren Innendurchmesser als das Ende des zweiten Rohres,
- wobei die Wandstärke des Übergreifteils (5) derart bemessen ist, dass eine Verringerung seines Innen- und Außendurchmessers beim Einsetzen in das Bohrloch gegeben ist.

3. Rohrverbindungsmuffe (1) nach Anspruch 1 oder 2, **gekennzeichnet durch** zwei oder mehrere gleichmäßig am Umfang verteilt angeordnete Deformationsbereiche.

4. Rohrverbindungsmuffe nach einem der Ansprüche 1 bis 3, **gekennzeichnet durch** drei Deformationsbereiche (9).

5. Rohrverbindungsmuffe (1) nach Anspruch 1, **dadurch gekennzeichnet, dass** der Grund der nutförmigen Vertiefung einen bogenförmigen konkaven Querschnitt aufweist.

6. Rohrverbindungsmuffe (1) nach einem der Ansprüche 1 bis 5, **dadurch gekennzeichnet, dass** die Wandstärke im Deformationsbereich (9) maximal bis zu einem Drittel der Wandstärke (11) neben dem Deformationsbereich (9) beträgt, vorzugsweise maximal bis zu einem Viertel.

7. Rohrverbindungsmuffe nach einem der Ansprüche 1 bis 6, **dadurch gekennzeichnet, dass** der Übergreifteil (5) mit einem Innengewinde (6) und das Ende des zweiten Rohres mit einem Außengewinde versehen sind.

8. Rohrverbindungsmuffe nach einem der Ansprüche 1 bis 7, **dadurch gekennzeichnet, dass** der Einsteckteil (3) und der Übergreifteil (5) als Einzelteile gefertigt und mittels einer Schweißnaht (14) miteinander verbunden sind.

## Claims

1. Pipe coupling (1) in the form of a hollow cylinder for connecting an end (4), which is present in a rock drill hole, of a first pipe (2), which is present in the rock drill hole, to an end of a second pipe, said coupling having the following features:
- an insertion element (3) for introduction into the end (4) of the first pipe (2);
- an engaging-over element (5) for engaging over the end of the second pipe;
- prior to being introduced into the end (4) of the first pipe (2), the insertion element (3) has an outer diameter (7) that is larger than the inner diameter (8) of the end (4) of the first pipe (2);
**characterised in that** the insertion element (3) is provided with at least one deformation zone (9) that extends longitudinally and allows a reduction in diameter while plastically deforming, the at least one deformation zone (9) being formed by a groove-shaped depression.

2. Pipe coupling (1) according to claim 1, **characterised by** the combination of the following features:
- the engaging-over element (5) has an outer diameter (15) which is larger than the rock drill hole;
- and has an inner diameter which is larger than the end of the second pipe;
- the wall thickness of the engaging-over element (5) being of a size such that there is a reduction in its inner and outer diameter when it is inserted in the rock drill hole.

3. Pipe coupling (1) according to claim 1 or 2, **characterised by** two or more deformation zones arranged in a manner distributed uniformly over the periphery.

4. Pipe coupling (1) according to one of claims 1 to 3, **characterised by** three deformation zones (9).

5. Pipe coupling (1) according to claim 1, **characterised in that** the bottom of the groove-shaped depression has an arcuate concave cross-section.

6. Pipe coupling (1) according to one of claims 1 to 5, **characterised in that** the wall thickness in the deformation zone (9) amounts to a maximum of one third of the wall thickness (11) next to the deformation zone (9), preferably to a maximum of one quarter.

7. Pipe coupling according to one of claims 1 to 6, **characterised in that** the engaging-over element (5) is provided with an internal thread (6), and the end of the second pipe is provided with an external thread.

8. Pipe coupling according to one of claims 1 to 7, **characterised in that** the insertion element (3) and the engaging-over element (5) are produced as individual elements and are connected to one another by means of a weld seam (14).

## Revendications

1. Manchon de connexion de tubes (1) de forme cylindrique creuse, destiné à connecter une extrémité (4) située dans un trou de forage de roche d'un premier tube (2) se trouvant dans le trou de forage de roche à une extrémité d'un deuxième tube, présentant les caractéristiques suivantes:
- une partie d'enfichage (3) destinée à être insérée dans l'extrémité (4) du premier tube (2),
- une partie de recouvrement (5) destinée à recouvrir l'extrémité du deuxième tube,
- la partie d'enfichage (3) présente, avant l'insertion dans l'extrémité (4) du premier tube (2), un diamètre extérieur (7) plus grand que le diamètre intérieur (8) de l'extrémité (4) du premier tube (2),
**caractérisé en ce que** la partie d'enfichage (3) est pourvue d'au moins une zone de déformation (9) s'étendant longitudinalement et permettant une réduction de diamètre par déformation plastique,
dans lequel ladite au moins une zone de déformation (9) est formée par un creux en forme de rainure.

2. Manchon de connexion de tubes (1) selon la revendication 1, **caractérisé par** la combinaison des caractéristiques suivantes:
- la partie de recouvrement (5) présente un diamètre extérieur (15) plus grand que le trou de forage
- et un diamètre intérieur plus grand que l'extrémité du deuxième tube,
- dans lequel l'épaisseur de paroi de la partie de recouvrement (5) est dimensionnée de telle manière qu'il se produise une réduction de son diamètre extérieur et intérieur lors de l'insertion dans le trou de forage.

3. Manchon de connexion de tubes (1) selon la revendication 1 ou 2, **caractérisé par** deux ou plusieurs zones de déformation uniformément réparties sur la périphérie.

4. Manchon de connexion de tubes selon l'une quelconque des revendications 1 à 3, **caractérisé par** trois zones de déformation (9).

5. Manchon de connexion de tubes (1) selon la revendication 1, **caractérisé en ce que** le fond du creux en forme de rainure présente une section transversale concave en forme d'arc.

6. Manchon de connexion de tubes (1) selon l'une quelconque des revendications 1 à 5, **caractérisé en ce que** l'épaisseur de paroi dans la zone de déformation (9) vaut au maximum un tiers de l'épaisseur de paroi (11) à côté de la zone de déformation (9), de préférence au maximum un quart.

7. Manchon de connexion de tubes selon l'une quelconque des revendications 1 à 6, **caractérisé en ce que** la partie de recouvrement (5) est munie d'un filet intérieur (6) et l'extrémité du deuxième tube est munie d'un filet extérieur.

8. Manchon de connexion de tubes selon l'une quelconque des revendications 1 à 7, **caractérisé en ce que** la partie d'enfichage (3) et la partie de recouvrement (5) sont fabriquées sous forme de pièces séparées et sont assemblées l'une à l'autre par un cordon de soudure (14).
